# EUROPÄISCHE PATENTSCHRIFT

(11) **EP 2 566 731 B1**
(45) Veröffentlichungstag und Bekanntmachung des Hinweises auf die Patenterteilung: **13.07.2016**
(21) Anmeldenummer: 11719786.3
(22) Anmeldetag: 28.04.2011
(51) Int. Cl.: B60T 11/26, B60T 17/06, B60T 17/22

(54) **AUSGLEICHSBEHÄLTER FÜR EINE HYDRAULISCHE KRAFTFAHRZEUGBREMSANLAGE**
EQUALIZING CONTAINER FOR A HYDRAULIC MOTOR-VEHICLE BRAKE SYSTEM
RÉSERVOIR DE COMPENSATION POUR SYSTÈME DE FREINAGE HYDRAULIQUE DE VÉHICULE AUTOMOBILE

(30) Priorität: 04.05.2010 DE 102010028530
(43) Veröffentlichungstag der Anmeldung: 13.03.2013
(73) Patentinhaber: Continental Teves AG & Co. oHG, 60488 Frankfurt (DE)
(72) Erfinder: NEUMANN, Hans-Jürgen, 65428 Rüsselsheim (DE); TANDLER, Peter, 61476 Kronberg/Ts. (DE); OTTMANN, Swen, 60488 Frankfurt/M (DE)
(86) Internationale Anmeldenummer: PCT/EP2011/056690
(87) Internationale Veröffentlichungsnummer: WO 2011/138207

(56) Entgegenhaltungen:
- DE-A1- 3 016 434
- DE-A1- 3 328 534
- DE-A1- 19 707 840
- DE-A1- 19 958 193
- DE-A1-102007 025 826
- FR-A1- 2 473 971
- GB-A- 2 204 997
- GB-A- 2 206 167
- GB-A- 2 211 354
- US-A- 4 487 021

## Beschreibung

Die Erfindung betrifft einen Ausgleichsbehälters für eine hydraulische Kraftfahrzeugbremsanlage mit einem Gehäuse umfassend einen Behälterinnenraum mit wenigstens einer Druckmittelkammer und einer Vorrichtung zur Überwachung eines Behälterfüllstandes umfassend eine Schalteinheit, die mit einem Kontaktträger in eine Führungshülse hineinragt, welche sich in eine separate Kammer des Behälterinnenraumes erstreckt, wobei ein am Kontaktträger angeordnetes Sensor- oder Schaltelement mittels eines auf der Führungshülse geführten Gebers in einem Schaltpunkt, an welchem die Schalteinheit ein Signal für eine elektronische Steuereinheit generiert, schaltbar ist, und wobei die separate Kammer über eine Druckmittelverbindung mit der Druckmittelkammer in Verbindung steht.

In einer hydraulischen Kraftfahrzeugbremsanlage befindet sich das benötigte Druckmittel, d.h. die Bremsflüssigkeit in dem Ausgleichsbehälter, wobei der Behälterfüllstand durch den Magneten, mittels welchen Schaltkontakte geschaltet werden, überwacht wird. Senkt sich der Füllstand der Bremsflüssigkeit, werden die Schaltkontakte geschaltet. Dieses Signal wird in einem elektronischen Steuergerät ausgewertet und der Fahrer des Kraftfahrzeuges kann durch eine Leuchte oder ähnliches gewarnt werden. Dabei muss sichergestellt sein, dass der Ausgleichsbehälter immer mit einem Minimum an Bremsflüssigkeit gefüllt ist, um die Funktion der Bremsanlage nicht in Frage zu stellen. In der Regel werden Vorrichtungen zur Überwachung eines Behälterfüllstandes verwendet, bei denen der Schwimmer einen Reedkontakt schaltet, sobald der Schwimmer eine vorbestimmte Lage (Schaltpunkt) einnimmt, in der der Behälterfüllstand ein definiertes Minimum unterschreitet. Durch die Schaltung des Reedkontaktes wird ein für den Fahrer erkennbares Warnsignal ausgelöst, wobei dann von diesem geeignete Gegenmaßnahmen einzuleiten sind.

Aus der DE 37 16 135 A1 ist beispielsweise ein derartiger Ausgleichbehälter bekannt. Um die Dynamik der Bremsflüssigkeit besser unter Kontrolle zu haben, werden üblicherweise die Innenwände, welche die Kammern im Behälterinnenraum begrenzen, mit Druckmittelverbindungen in Form von Durchbrüchen, Überläufen etc. ausgestattet.

Aus GB 2 211 354 A ist ein Ausgleichsbehälter bekannt, der über eine eckige, durch eine Wandung von dem restlichen Behälterinnenraum separierte Schwimmerkammer mit einem darin frei angeordneten Schwimmer verfügt. Die Wandung weist einen trichterförmigen in Richtung Schwimmerkammer sich verjüngenden Durchbruch auf, welcher den Durchfluss von Bremsflüssigkeit aus der Schwimmerkammer verlangsamen soll.

Sind außerdem die Ausgleichsbehälter mit einer Vorrichtung zur Überwachung eines Behälterfüllstandes (Warnvorrichtung) ausgerüstet, sind die Führungshülse und der Schwimmer wegen der auftretenden Flüssigkeitsdynamik in einer separaten Schwimmerkammer vorgesehen, wobei es zu folgenden Problemen kommen kann: Bei Abbremsung, Beschleunigung oder Kurvenfahrt sowie bei Überlagerung dieser Anforderungen kann es aufgrund der Behälterform vorkommen, dass die Flüssigkeit zu schnell aus der Schwimmerkammer fließt und dadurch der Schwimmer absinkt und die Warnvorrichtung schaltet.
Durch das Schalten der Warnvorrichtung kommt es zur ungewollten Anzeige bzw. zum Eintrag einen Fehlerspeicher des Fahrzeuges und der Fahrer wird aufgefordert, eine Werkstatt aufzusuchen, um den Fehler beheben zu lassen.

Um ein schnelles Ausfließen des Druckmittels aus der separaten Kammer zu verhindern, kann die Druckmittelverbindung beispielsweise als sehr kleiner Durchbruch vorgesehen werden, was sich allerdings nachteilig auf den Rücklauf des Druckmittels in die Kammer auswirkt. Hierdurch kann es ebenfalls zu einer fehlerhaften Schaltung der Warnvorrichtung kommen.

Eine Abhilfe kann durch den Einsatz eines Zeitgliedes geschaffen werden, welches die Schaltung der Warnvorrichtung verzögert. Als nachteilig werden allerdings die zusätzlichen Kosten angesehen.

Es ist Aufgabe der vorliegenden Erfindung, einen dahingehend verbesserten Ausgleichbehälter bereitzustellen.

Diese Aufgabe wird erfindungsgemäß dadurch gelöst, dass Ventilmittel vorgesehen sind, mit welchen der Druckmittelstrom zwischen der separaten Kammer und der Druckmittelkammer steuerbar ist. Hierdurch ist es möglich, Extremlagen des Ausgleichsbehälters und der damit einhergehenden Flüssigkeitsdynamik entgegen zu wirken, so dass eine fehlerhafte Anzeige der Warnvorrichtung ausgeschlossen werden kann. Ein kostenintensives Zeitglied kann dadurch eingespart werden.

Vorzugsweise drosseln die Ventilmittel einen Ausfluss des Druckmittels aus der separaten Kammer in die Druckmittelkammer und ermöglichen einen beschleunigten Rücklauf von der Druckmittelkammer in die separate Kammer. Damit ist ein ungewolltes Absinken des Druckmittelfüllstandes in der Schwimmerkammer ausgeschlossen. Gleichzeitig kann Druckmittel, welches aus der Schwimmerkammer entwichen ist, wieder schnell zurückströmen.

Gemäß einer vorteilhaften Weiterbildung der Erfindung ist die Druckmittelverbindung als Durchbruchsöffnung einer Kammerwand im Bereich eines Behälterbodens ausgebildet und die Ventilmittel sind in einem vorbestimmten Abstand vor der Durchbruchsöffnung am Behälterboden angeordnet. Dabei ist der Abstand der Ventilmittel ein Kriterium zur Steuerung des Druckmittelstroms, welches je nach den Anforderungen, die an den Ausgleichsbehälter gestellt werden, verändert werden kann.

Vorzugsweise sind die Ventilmittel als Dom ausgebildet, welcher sich vom Behälterboden in den Behälterinnenraum erstreckt. Hierdurch wird eine einfache Herstellung des Ausgleichsbehälters und den Ventilmitteln ermöglicht. In der Regel besteht das Gehäuse des Ausgleichsbehälters zwei Spritzguss-Gehäuseteilen, welche miteinander verschweißt werden. Der Dom kann somit gleich bei der Herstellung des unteren Gehäuseteiles an den Behälterboden angespritzt werden.

Gemäß einer vorteilhaften Ausführungsform der Erfindung sind die Ventilmittel im Querschnitt im Wesentlichen sichelförmig ausgebildet.

Eine alternative vorteilhafte Ausführungsform sieht vor, dass die Ventilmittel im Querschnitt im Wesentlichen halbkreisförmig ausgebildet sind, wobei eine Fläche der Durchbruchsöffnung zugewandt vorgesehen ist.

Vorzugsweise kann die Fläche uneben ausgebildet sein.

Die Erfindung wird nachstehend anhand der Zeichnung erläutert, welche Ausführungsbeispiele zeigt. Dabei zeigt jeweils stark schematisiert sowie teilweise im Schnitt:
- Fig. 1: einen bekannten Ausgleichsbehälter im Längsschnitt;
- Fig. 2: ein erstes Ausführungsbeispiel eines erfindungsgemäßen Ausgleichsbehälters im Längsschnitt;
- Fig. 3: einen Ausschnitt des ersten Ausführungsbeispiels gemäß Fig. 2 im Querschnitt bei Ausfluss des Druckmittels aus der separaten Kammer;
- Fig. 4: den Ausschnitt des ersten Ausführungsbeispiels gemäß Fig. 2 im Querschnitt bei Rücklauf des Druckmittels in die separate Kammer;
- Fig. 5: ein Ventilmittel eines zweiten Ausführungsbeispiels eines erfindungsgemäßen Ausgleichsbehälters im Querschnitt und
- Fig. 6: ein Ventilmittel eines dritten Ausführungsbeispiels eines erfindungsgemäßen Ausgleichsbehälters im Querschnitt.

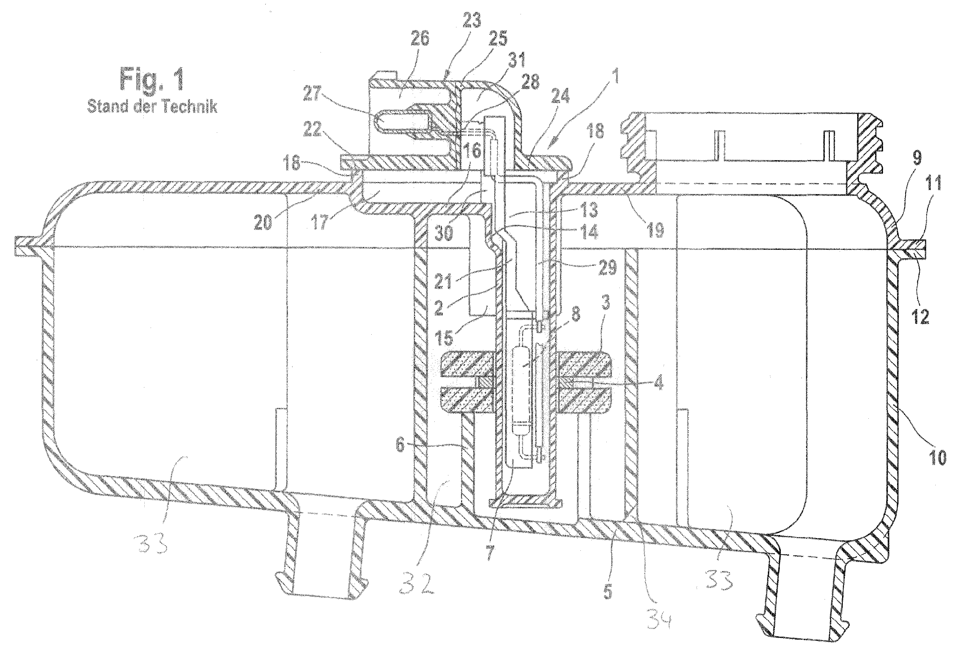

Fig. 1 zeigt einen bekannten Ausgleichsbehälter 1 für Bremsflüssigkeit gemäß der DE 37 16 135 A1 mit einer Vorrichtung zur Überwachung des Behälterfüllstandes. Der Ausgleichsbehälter 1 ist beispielsweise an einem nicht dargestellten Hauptzylinder einer Fahrzeugbremsanlage befestigt und weist eine in sein Behälterinnenraum ragende Führungshülse 2 auf, die an ihrem, dem Behälterinnenraum zugewandten Ende verschlossen ist. Längs der Führungshülse 2, die beispielsweise einen kreisförmigen Querschnitt hat, ist ein Schwimmer 3 verschiebbar angeordnet, der z.B. als Ring ausgebildet ist und einen Bestandteil einer Vorrichtung zum Überwachen des Behälterfüllstandes darstellt. Der Schwimmer 3 trägt einen ringförmigen Magneten 4 als magnetischen Geber. Ein vom Boden 5 des Ausgleichsbehälters 1 emporragender, die Führungshülse 2 teilweise konzentrisch umgebender Rohrstutzen 6 ist als Anschlag für den Schwimmer 3 vorgesehen. Dieser Anschlag legt die tiefste Stellung des Schwimmers 3 im Ausgleichsbehälter 1 fest und verhindert, dass der Schwimmer 3 die Führungshülse 2 verlassen kann.

Die Vorrichtung zum Überwachen des Behälterfüllstandes umfasst eine Schalteinheit mit einem Deckel 23, einem Kontaktträger 25 und einem Träger 7, welcher im Inneren der Führungshülse 2 vorgesehen ist und an dem ein Reed-Schalter 8 als Schaltelement befestigt ist. Sobald der Magnet 4 durch Absinken des Behälterfüllstandes einen nicht gezeigten Schaltpunkt S des Schaltelementes passiert, schließt bzw. öffnet der Reed-Kontakt des Reed-Schalters 8 und es wird ein Signal für eine elektronische Schalteinheit der Kraftfahrzeugbremsanlage generiert. Am Träger 7 ist eine Fahne 21 befestigt, die sich parallel zur Längsachse der Führungshülse 2 erstreckt und in einen inneren Schlitz 13 eines Radialvorsprunges 14 der Führungshülse 2 hineinragt. Die Führungshülse 2 ist mit mehreren an seiner Oberfläche symmetrisch gegeneinander versetzt angeordneten Rippen 15 versehen, die den oberen Anschlag für den Schwimmer 3 bilden. Die Führungshülse 2 sowie der Schwimmer 3 sind in einer separaten Kammer 32 (Schwimmerkammer) angeordnet, welche über eine Druckmittelverbindung 34 mit dem Behälterinnenraum, d.h. einer bzw. mehreren Druckmittelkammern 33 in Verbindung steht.

An ihrem oberen Ende geht die Führungshülse 2 in einen Boden 16 eines flachen Hohlraumes 17 über, dessen Seitenwände 18 mit Wänden 19 und 20 des Ausgleichsbehälters 1 verbunden sind. Die Seitenwände 18 überragen die Wände 19, 20 des Ausgleichsbehälters 1 um ein geringes Stück und bilden mit ihren oberen Rändern 22 Anschlagflächen für den Deckel 23, der eine ebene Grundplatte 24 enthält, von der der Kontaktträger 25 empor ragt, das mit den Seitenwänden 18 verschweißt vorgesehen ist. Der Kontaktträger 25 ist mit einer Ausnehmung 26 versehen, in die zwei Kontaktstifte 27 oder Messerkontakte eines Steckverbinders hineinragen, der mit einem Ende in den Kontaktträger 25 gas- bzw. flüssigkeitsdicht eingesetzt ist. Das der Ausnehmung 26 entgegen gesetzte Ende 28 eines jeden Kontaktstiftes 27 ist mit dem Ende einer elektrischen Leitung 29 verbunden. Die anderen Enden der elektrischen Leitungen 29 sind an dem Reed-Schalter 8 angeschlossen.

In den Hohlraum 17 ragen zwei, die Wände auf einander gegenüberliegenden Seiten des Schlitzes 13 ein Stück fortsetzende Vorsprünge 30, die beispielsweise nicht höher sind als die Seitenwände 18. Die Fahne 21 erstreckt sich in dem Raum zwischen den Vorsprüngen 30 und ist mittels geeigneten Verfahren (z.B. Kleben, Schweißen, Anschrauben, Anpressen) mit diesen verbunden. Im Kontaktträger 25 ist in dem über den Vorsprüngen 30 liegenden Teil eine Ausnehmung 31 vorgesehen, in die das Ende der Fahne 21 und ggf. die Vorsprünge 30 hineinragen können, wenn der Deckel 23 den Hohlraum 17 verschließt. Der Ausgleichsbehälter 1 besteht aus einem Gehäuse umfassend einen Gehäuseoberteil 9 und einen Gehäuseunterteil 10, welche an ihren Rändern 11,12 miteinander verschweißt sind.

Bei Extremlagen des Fahrzeuges, wie Abbremsung, Beschleunigung oder Kurvenfahrt sowie bei Überlagerung dieser Anforderungen, kann es aufgrund der Behälterform vorkommen, dass die Flüssigkeit zu schnell aus der Schwimmerkammer 32 fließt und dadurch der Schwimmer 3 absinkt und die Warnvorrichtung schaltet. Dieser Effekt kann ferner auch dadurch zustande kommen, dass die ausgeflossene Flüssigkeit nicht schnell genug in die Schwimmerkammer 32 zurück strömt. Hierbei kommt es durch das Schalten der Warnvorrichtung zur ungewollten Anzeige bzw. zum Eintrag in den Fehlerspeicher und der Fahrer wird aufgefordert, eine Werkstatt aufzusuchen, um den Fehler beheben zu lassen.

Der erfindungsgemäße Ausgleichsbehälter 35, welcher sich grundsätzlich nicht in Funktion und Aufbau von bekannten Ausgleichsbehältern unterscheidet, weist deshalb Ventilmittel 36 auf, mit welchen der Druckmittelstrom zwischen einer separaten Kammer 37 - auch Schwimmerkammer genannt - und einer oder mehreren Druckmittelkammern 38 steuerbar ist. Hierdurch ist es möglich, Extremlagen des Ausgleichsbehälters 35 und der damit einhergehenden Flüssigkeitsdynamik entgegen zu wirken, so dass eine fehlerhafte Anzeige der Warnvorrichtung ausgeschlossen werden kann.

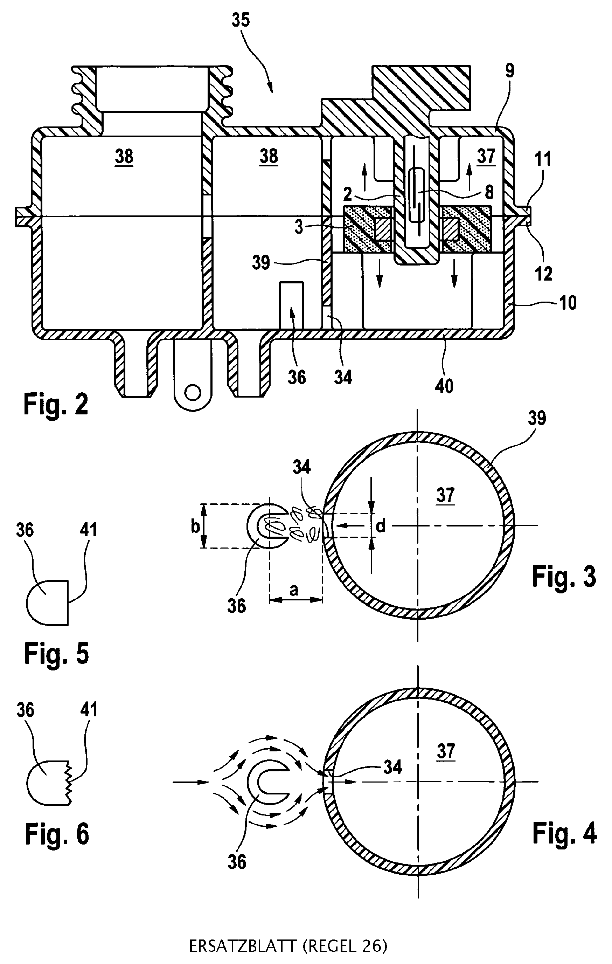

Den Fig. 2 bis 6 sind drei Ausführungsbeispiele zu entnehmen, wobei Bauteile, welche den Bauteilen des gemäß Fig. 1 gezeigten, bekannten Ausgleichsbehälters 1 gleichen, mit gleichen Bezugszeichen versehen sind. Nachfolgend wird nur auf die erfindungswesentlichen Unterschiede eingegangen.

Wie insbesondere Fig. 3 zu entnehmen ist, welche einen quergeschnittenen Ausschnitt des in Fig. 2 gezeigten ersten Ausführungsbeispiels bei Ausfluss des Druckmittels aus der separaten Kammer 37 zeigt, drosseln die Ventilmittel 36 den Ausfluss des Druckmittels aus der separaten Kammer 37 in die Druckmittelkammer 38.

Die Druckmittelverbindung 34 ist dabei beispielsweise als Durchbruchsöffnung einer Kammerwand 39 im Bereich eines Behälterbodens 40 ausgebildet und die Ventilmittel 36 sind in einem vorbestimmten Abstand a vor der Durchbruchsöffnung am Behälterboden 40 angeordnet.

Die Ventilmittel 36 sind vorteilhafterweise als Dom ausgebildet, welcher sich vom Behälterboden 40 in den Behälterinnenraum erstreckt. Hierdurch wird eine einfache Herstellung des Ausgleichsbehälters 35 und den Ventilmitteln 36 ermöglicht. Die beiden Gehäuseteile 9, 10 werden in der Regel als Spritzgussteile hergestellt, so dass der Dom somit gleich bei der Herstellung des unteren Gehäuseteiles 10 an den Behälterboden 40 angespritzt werden kann.

Der Abstand a der Ventilmittel 36 von der Kammerwand 39 ist neben einer Breite b des Ventilmittels 36 und einem Durchmesser d der Durchbruchsöffnung ein Kriterium zur Steuerung des Druckmittelstroms, welches je nach den Anforderungen, die an den Ausgleichsbehälter 35 gestellt werden, verändert werden kann. Die Form der Durchbruchsöffnung ist dabei nicht auf eine Kreisform beschränkt.

Gemäß dem ersten Ausführungsbeispiel sind die Ventilmittel 36 im Querschnitt im Wesentlichen sichelförmig vorgesehen, was den Fig. 3 und 4 deutlich zu entnehmen ist.

Die Sichelform ermöglicht den in Fig. 3 gezeigten gedrosselten Ausfluss des Druckmittels und einen, in Fig. 4 anhand von Pfeilen dargestellten beschleunigten Rücklauf von der Druckmittelkammer 38 in die separate Kammer 37.
Damit ist ein ungewolltes Absinken des Druckmittelfüllstandes in der Schwimmerkammer 37 ausgeschlossen. Gleichzeitig kann Druckmittel, welches aus der Schwimmerkammer 37 entwichen ist, wieder schnell zurückströmen.

Alternative Ausführungsbeispiele der Ventilmittel 36 sind in den Fig. 5 und 6 dargestellt.
Die Ventilmittel 36 können demnach beispielsweise im Querschnitt im Wesentlichen halbkreisförmig ausgebildet sein, wobei eine Fläche 41 der Durchbruchsöffnung 34 zugewandt ist. Wie Fig. 6 zeigt, kann die Fläche 41 zur verbesserten Drosselung des Druckmittelflusses auch uneben ausgebildet sein.

Die Form der Ventilmittel 36 ist nicht auf die gezeigten Ausführungsbeispiele begrenzt. Denkbar sind alle Formen, die einen Ausfluss des Druckmittels aus der separaten Kammer 37 in die Druckmittelkammer 38 drosseln und einen beschleunigten Rücklauf von der Druckmittelkammer 38 in die separate Kammer 37 ermöglichen.

### Bezugszeichenliste

- 1: Ausgleichsbehälter
- 2: Führungshülse
- 3: Schwimmer
- 4: Magnet
- 5: Boden
- 6: Rohrstutzen
- 7: Träger
- 8: Reed-Schalter
- 9: Gehäuseoberteil
- 10: Gehäuseunterteil
- 11: Rand
- 12: Rand
- 13: Schlitz
- 14: Radialvorsprung
- 15: Rippe
- 16: Boden
- 17: Hohlraum
- 18: Seitenwand
- 19: Wand
- 20: Wand
- 21: Fahne
- 22: Rand
- 23: Deckel
- 24: Grundplatte
- 25: Kontaktträger
- 26: Ausnehmung
- 27: Kontaktstift
- 28: Ende
- 29: Leitung
- 30: Vorsprung
- 31: Ausnehmung
- 32: Schwimmerkammer
- 33: Druckmittelkammer
- 34: Druckmittelverbindung
- 35: Ausgleichsbehälter
- 36: Ventilmittel
- 37: Kammer
- 38: Druckmittelkammer
- 39: Kammerwand
- 40: Behälterboden
- 41: Fläche

- a: Abstand
- b: Breite
- d: Durchmesser

## Patentansprüche

1. Ausgleichsbehälter (35) für eine hydraulische Kraftfahrzeugbremsanlage mit einem Gehäuse umfassend einen Behälterinnenraum mit wenigstens einer Druckmittelkammer (38) und einer Vorrichtung zur Überwachung eines Behälterfüllstandes umfassend eine Schalteinheit, die mit einem Kontaktträger in eine Führungshülse (2) hineinragt, welche sich in eine separate Kammer (37) des Behälterinnenraumes erstreckt, wobei ein am Kontaktträger angeordnetes Sensor- oder Schaltelement mittels eines auf der Führungshülse (2) geführten Gebers (3) in einem Schaltpunkt, an welchem die Schalteinheit ein Signal für eine elektronische Steuereinheit generiert, schaltbar ist, und wobei die separate Kammer (37) über eine Druckmittelverbindung (34) mit der Druckmittelkammer (38) in Verbindung steht, wobei Ventilmittel (36) vorgesehen sind, mit welchen der Druckmittelstrom zwischen der separaten Kammer (37) und der Druckmittelkammer (38) derart steuerbar ist, dass ein Ausfluss des Druckmittels aus der separaten Kammer (37) in die Druckmittelkammer (38) gedrosselt und ein-Rücklauf von der Druckmittelkammer (38) in die separate Kammer (37) beschleunigt ist, **dadurch gekennzeichnet, dass** die Druckmittelverbindung (34) als Durchbruchsöffnung einer Kammerwand (39) im Bereich eines Behälterbodens (40) ausgebildet ist und die Ventilmittel (36) in einem vorbestimmten Abstand (a) vor der Durchbruchsöffnung am Behälterboden (40) angeordnet sind.

2. Ausgleichsbehälters (35) nach Anspruch 1, **dadurch gekennzeichnet, dass** die Ventilmittel (36) als Dom ausgebildet sind, welcher sich vom Behälterboden (40) in den Behälterinnenraum erstreckt.

3. Ausgleichsbehälters (35) nach Anspruch 1 oder 2, **dadurch gekennzeichnet, dass** die Ventilmittel (36) im Querschnitt im Wesentlichen sichelförmig ausgebildet sind.

4. Ausgleichsbehälters (35) nach Anspruch 1 oder 2, **dadurch gekennzeichnet, dass** die Ventilmittel (36) im Querschnitt im Wesentlichen halbkreisförmig ausgebildet sind, wobei eine Fläche (41) der Durchbruchsöffnung zugewandt vorgesehen ist.

5. Ausgleichsbehälters (35) nach Anspruch 4, **dadurch gekennzeichnet, dass** die Fläche (41) uneben ausgebildet ist.

## Claims

1. Expansion tank (35) for a hydraulic motor vehicle brake system, having a housing comprising a tank interior with at least one pressure medium chamber (38) and with a device for monitoring a tank fill level, which device comprises a switching unit which projects by way of a contact carrier into a guide sleeve (2) which extends into a separate chamber (37) of the tank interior, wherein a sensor or switching element arranged on the contact carrier is switchable, by way of an encoder (3) which is guided on the guide sleeve (2), at a switching point at which the switching unit generates a signal for an electronic control unit, and wherein the separate chamber (37) is connected to the pressure medium chamber (38) via a pressure medium connection (34), wherein valve means (36) are provided by way of which the pressure medium flow between the separate chamber (37) and the pressure medium chamber (38) can be controlled such that an upward flow of the pressure medium out of the separate chamber (37) into the pressure medium chamber (38) can be throttled, and an inward return flow from the pressure medium chamber (38) into the separate chamber (37) is accelerated, **characterized in that** the pressure medium connection (34) is in the form of an aperture opening in a chamber wall (39) in the region of a tank base (40), and the valve means (36) are arranged, at a predetermined distance (a) in front of the aperture opening, on the tank base (40).

2. Expansion tank (35) according to Claim 1, **characterized in that** the valve means (36) are in the form of a dome which extends from the tank base (40) into the tank interior.

3. Expansion tank (35) according to Claim 1 or 2, **characterized in that** the valve means (36) are of substantially sickle-shaped form in cross section.

4. Expansion tank (35) according to Claim 1 or 2, **characterized in that** the valve means (36) are of substantially semicircular form in cross section, wherein a surface (41) is provided so as to face toward the aperture opening.

5. Expansion tank (35) according to Claim 4, **characterized in that** the surface (41) is of uneven form.

## Revendications

1. Réservoir de compensation (35) pour une installation de freinage hydraulique de véhicule automobile comprenant un boîtier comportant un espace intérieur de réservoir avec au moins une chambre de fluide sous pression (38) et un dispositif pour contrôler un niveau de remplissage du réservoir comprenant une unité de commutation qui pénètre avec un support de contact dans une douille de guidage (2) qui s'étend dans une chambre séparée (37) de l'espace interne du réservoir, un élément de capteur ou de commutation disposé sur le support de contact pouvant être commuté au moyen d'un détecteur (3) guidé sur la douille de guidage (2) dans un point de commutation au niveau duquel l'unité de commutation génère un signal pour une unité de commande électronique, et la chambre séparée (37) étant en liaison par le biais d'une liaison de fluide sous pression (34) avec la chambre de fluide sous pression (38), des moyens de soupape (36) étant prévus, avec lesquels le flux de fluide sous pression entre la chambre séparée (37) et la chambre de fluide sous pression (38) peut être commandé, de telle sorte qu'une évacuation du fluide sous pression hors de la chambre séparée (37) dans la chambre de fluide sous pression (38) soit étranglée et qu'un retour depuis la chambre de fluide sous pression (38) dans la chambre séparée (37) soit accéléré, **caractérisé en ce que** la liaison de fluide sous pression (34) est réalisée sous forme d'ouverture de passage d'une paroi de chambre (39) dans la région d'un fond de réservoir (40) et les moyens de soupape (36) sont disposés à une distance prédéterminée (a) de l'ouverture de passage au niveau du fond de réservoir (40).

2. Réservoir de compensation (35) selon la revendication 1, **caractérisé en ce que** les moyens de soupape (36) sont réalisés sous forme de dôme qui s'étend depuis le fond de réservoir (40) dans l'espace interne de réservoir.

3. Réservoir de compensation (35) selon la revendication 1 ou 2, **caractérisé en ce que** les moyens de soupape (36) sont réalisés en section transversale essentiellement en forme de croissant.

4. Réservoir de compensation (35) selon la revendication 1 ou 2, **caractérisé en ce que** les moyens de soupape (36) sont réalisés en section transversale essentiellement sous forme semi-circulaire, une surface (41) de l'ouverture de passage étant prévue de manière tournée vers l'ouverture de passage.

5. Réservoir de compensation (35) selon la revendication 4, **caractérisé en ce que** la surface (41) est réalisée sous forme non plane.
